# EUROPEAN PATENT SPECIFICATION

(11) **EP 0 325 807 B1**
(45) Date of publication and mention of the grant of the patent: **05.05.1993**
(21) Application number: 88202453.2
(22) Date of filing: 03.11.1988
(51) Int. Cl.: A23B 7/06, A23N 12/02

(54) **Device for treating foodstuffs**
Einrichtung zur Bearbeitung von Nahrungsmitteln
Installation pour traiter des aliments

(30) Priority: 26.01.1988 NL 8800165
(43) Date of publication of application: 02.08.1989
(73) Proprietor: WOESTENBURG & v.d. MEER B.V., NL-1506 PD Zaandam (NL)
(72) Inventor: Baijards, Johannes Albertus, NL-1502 NN Zaandam (NL)
(74) Representative: Vollebregt, Cornelis Jacobus, Ir.

(56) References cited:
- FR-A- 1 106 963
- FR-A- 2 360 265
- US-A- 3 086 444
- US-A- 3 760 714

## Description

The invention relates to a device for treating foodstuffs, said device being provided with a drum and a transport screw rotatably arranged inside the drum for moving the foodstuffs in the longitudinal direction of the drum, in the direction of a wheel-shaped means provided with blades and being connected to one end of the transport screw, said device being further provided with a discharge chute located partly inside the wheel-shaped means, all this such that during operation foodstuffs can be transported upwards by means of the rotating blades of the wheel-shaped means and be deposited in the discharge chute.

Such devices, as e.g. known from US-A-3,086,444 and FR-A-1,106,963 are e.g. used for blanching foodstuffs, as is usual for the preliminary treatment of chips cut from potatoes. The foodstuffs are hereby put in the drum near one end of the device, said drum being filled with hot water, and gradually moved to the other end of the drum by means of the transport screw and discharged in the wheel-shaped means there. In the devices known from the above publications the end of the transport screw is fixed to the edge of a circular casing of the wheel-shaped means surrounding the blades, said casing having the same diameter as the transport screw. When using such a construction there is a danger that the material displaced becomes wedged near the connecting point between the end of the transport screw and the casing of the wheel-shaped means and/or is crushed there.

Wedging or crushing may also take place in the narrow gap located between the wall of the drum accomodating the transport screw and the wheel-shaped means and the circular casing of the wheel-shaped means surrounding the blades of the wheel-shaped means.

The purpose of the invention is to obtain a device of the above kind, wherein the disadvantages of these known devices can be avoided.

According to the invention this can be achieved in that said one end of the transport screw projects beyond the drum and in that the wheel-shaped means is fixed to the outer part of the screw blade of the transport screw located outside the drum by means of a casing, said casing surrounding the drum with its end remote from the wheel-shaped means.

By using the construction according to the invention an unimpeded passage of the material from the drum, via the casing surrounding the end of the transport screw projecting from the drum, towards the side of the wheel-shaped means can be ensured.

The invention will be further explained hereinafter with reference to an embodiment of the construction according to the invention diagrammatically illustrated in the accompanying figures.

Figure 1 illustrates a part of a device according to the invention, partly in plan view and partly in section.

Figure 2 is a side view of figure 1, seen according to the arrow II in figure 1.

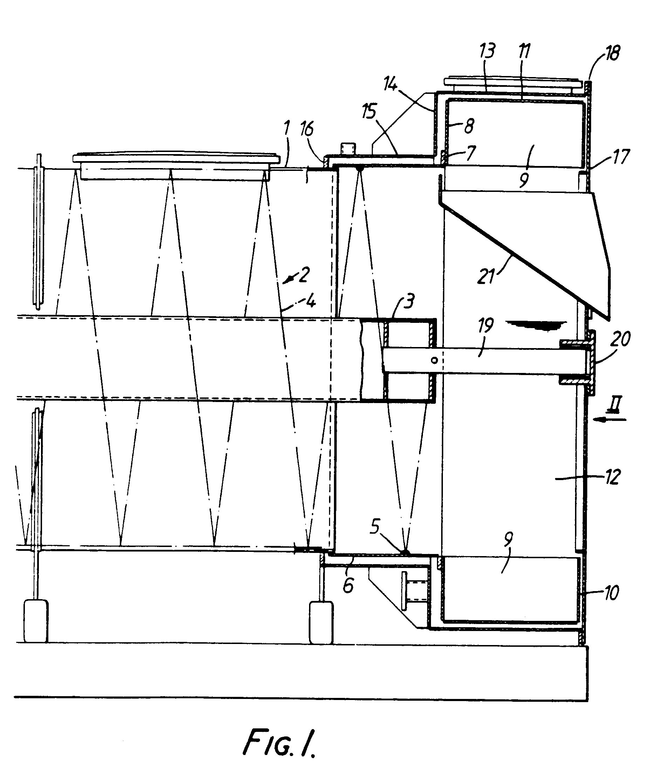

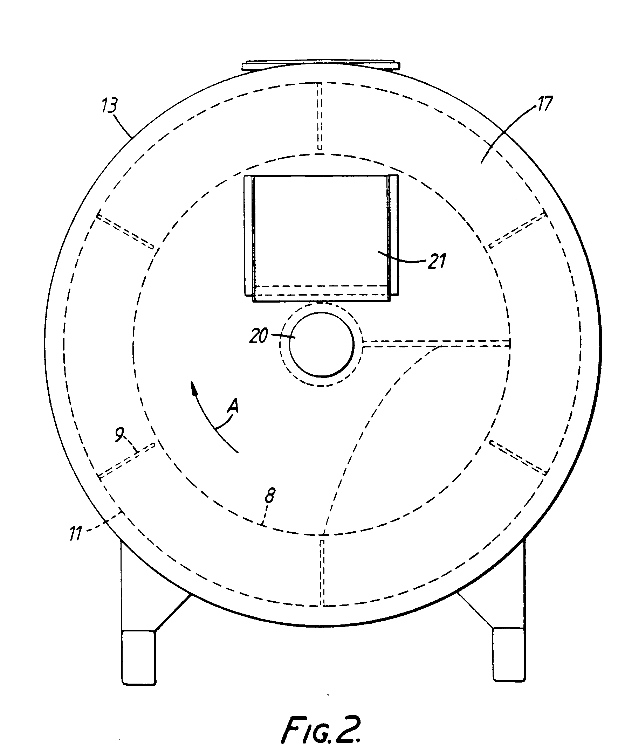

The device illustrated in figures 1 and 2 comprises a drum 1, only partly shown, which is arranged such that the longitudinal axis of said drum extends at least substantially horizontally.

Inside the drum there is arranged a transport screw 2, which is provided with a centrally located tubular shaft 3 and a screw blade 4 extending helically around said shaft 3 and being fixed to the shaft 3. As will be apparent in particular from figure 1 the screw blade 4 projects beyond the casing of the drum 1 near one end of the transport scew 2, whilst said part of the screw blade 4 projecting beyond the casing of the drum 1 also has a slightly larger external diameter than the part of the screw blade which is located inside the casing of the drum 1.

To the part of the screw blade 4 located outside the casing of the drum 1 there is fixed, e.g. by means of welded joints 5, a casing 6 surrounding said part of the screw blade 4. The construction is thereby preferably such that, as is illustrated in figure 1, the one end of the casing 6 having a circular section surrounds the end of the drum 1 located nearby.

To the end of the casing 6 remote from the drum 1 there is fixed a flange 7 which extends from the circumference of the casing 6 towards the outside. To said flange 7 there is fixed an annular plate 8, which is located in a plane extending perpendicularly to the centre line of the transport screw 2. The diameter of the central hole provided in the annular plate 8 is thereby equal to or slightly larger than the internal diameter of the casing 6.

To the annular plate 8 there are fixed blades 9 extending perpendicularly to said plate 8, which blades, as appears in particular from fig 2, are arranged in planes directed radially relatively to the axis of rotation of the transport screw. The ends of the blades 9 remote from the plate 8 are fixed to an annular plate 10 corresponding with the annular plate 8 and extending parallel to the plate 8.

Around the outside edges of the blades 9, between the annular plates 8 and 10, there is provided a casing 11 having a circular section. The parts 8 - 11 described above thus form a wheel-shaped means provided with blades 9, which wheel-shaped means is connected to the transport screw 2 via the casing 6 and which will rotate along with the transport screw 2 during operation.

Said wheel-shaped means is thereby located in a chamber 12, which is i.a. bounded by a casing 13 extending concentrically around the casing 11, said casing 13 being fixed at its end directed towards the drum 1 to the outer circumference of an annular plate 14 extending parallel to the annular plate 8. As will be apparent from fig 1 the diameter of the central hole provided in the annular plate 14 is larger than the external diameter of the casing 6. a connecting piece 15, fixed to the plate 14 and extending concentrically around the casing 6, joining the boundary edge of said hole, said connecting piece 15 being fixed with its end remote from the annular plate 14 to a flange 16 surrounding the drum 1 and being fixed to the drum.

At the side remote from the drum 1 the chamber 12 is closed by means of a cover plate 17, which is fixed to a flange 18 fixed to the end of the casing 13.

A stub shaft 19 fixed to the shaft 3 of the transport screw is journalled with its end remote from the transport screw in a bearing 20 fixed to the plate 17.

Inside the chamber 12, near the upper side of the chamber, there is furthermore arranged a discharge chute 21, which projects with one end from the cover plate 17.

During operation the drum, and also the chamber 12 being in open communication with said drum 1, will be filled with water or the like kept at a desired temperature for blanching foodstuffs. The foodstuffs to be treated, such as e.g. chipped potatoes, are supplied to the interior of the drum near the left-hand end (not shown) of the drum, seen in fig 1. During operation the transport screw with the fan-shaped means fixed thereto is also rotated in the direction according to arrow A (fig 2), so that the foodstuffs will be gradually moved through the drum, in the direction of the chamber 12, by means of the transport screw. Near the end of the transport screw the foodstuffs move through the casing 6 to the room in which the blades 9 rotate. By means of the blades 9 the foodstuffs will be carried upwards in the direction according to arrow A and fall from the blades into the discharge chute 21 near the upper side of the chamber. Via the discharge chute the foodstuffs will move out of the device.

Because of the connection described above of the wheel-shaped means formed by the parts 8 - 11 to the transport screw by means of the casing surrounding the transport screw at its outer circumference there are no rotating means near the passage between the end of the casing of the drum 1 and the chamber 12 which extend from the axis of the transport screw to the outside, as in the usual devices of this kind. In contrast thereto the passage from the casing to the interior of the chamber 12 is entirely free from such rotating means, so that the foodstuffs can be transported from the casing to the chamber 12 without any risk of being damaged.

It is furthermore noted that the plates 8 and 10, as well as the casing, are preferably perforated.

## Claims

1. Device for treating foodstuffs, said device being provided with a drum (1) and a transport screw (2) rotatably arranged inside the drum (1) for moving the foodstuffs in the longitudinal direction of the drum (1) in the direction of a wheel-shaped means (8-11) provided with blades (9) and being connected to one end of the transport screw (2), said device being further provided with a discharge chute (21) located partly inside the wheel-shaped means (8-11), all this such that during operation foodstuffs can be transported upwards by means of the rotating blades (9) of the wheel-shaped means (8-11) and be deposited in the discharge chute (21), characterized in that said one end of the transport screw (2) projects beyond the drum (1), and in that the wheel-shaped means (8-11) is fixed to the outer part of the screw blade (4) of the transport screw (2) located outside the drum (1), by means of a casing (6), said casing (6) surrounding the drum (1) with its end remote from the wheel-shaped means (8-11).

2. Device according to claim 1, characterized in that the part of the transport screw (2) projecting beyond the drum (1) and the casing (6) are surrounded by a connecting piece (15), which is provided between a chamber (12) accommodating the wheel-shaped means (8-11) and the end of the drum (1).

3. Device according to claim 1 or 2, characterized in that, seen in the direction of the axis of rotation of the wheel-shaped means (8-11), the blades (9) of the wheel-shaped means substantially project beyond the casing (6) fixed to the screw blades (4) of the transport screw.

## Patentansprüche

1. Vorrichtung zur Behandlung von Lebensmitteln mit einer Trommel (1) und einer Transportschnecke (2), die drehbar in der Trommel (1) angeordnet ist, um das Lebensmittel in Längsrichtung der Trommel (1) in Richtung eines radförmigen Mittels (8 - 11) mit Flügels (9) zu bewegen und welches mit einem Ende der Transportschraube (2) verbunden ist, wobei die Vorrichtung weiterhin eine Auslaßrinne (21) aufweist, die teilweise innerhalb des radförmigen Mittels (8 - 11) liegt, so daß während des Betriebs Lebensmittel durch die rotierenden Flügels (9) des radförmigen Mittels (8 - 11) aufwärts geleitet werden können und in die Auslaßrinne (21) gelangen, dadurch gekennzeichnet, daß das eine Ende der Transportschnecke (2) aus der Trommel (1) hervortritt, und daß das radförmige Mittel (8 - 11) an dem äußeren Teil des Schneckenflügels (4) der Transportschnecke (2), das außerhalb der Trommel liegt, durch ein Gehäuse (6) angebracht ist, wobei das Gehäuse (6) die Trommel (1) mit seinem von dem radförmigen Mittel (8 - 11) entfernten Ende umgibt.

2. Vorrichtung nach Anspruch 1, dadurch gekennzeichnet, daß der Teil der Transportschnecke (2), der über die Trommel (1) hervortritt und das Gehäuse (6) von einem Verbindungsteil (15) umgeben sind, welches zwischen einer Kammer (12), in der sich das radförmige Mittel (8 - 11) befindet, und dem Ende der Trommel (1) vorgesehen ist.

3. Vorrichtung nach Anspruch 1 oder 2, dadurch gekennzeichnet, daß die Flügels (9) des radförmigen Mittels - in Richtung der Drehachse des radförmigen Mittels (8 - 11) betrachtet - wesentlich über das Gehäuse (6) vorstehen, das an den Schneckenflügels (4) der Transportschnecke befestigt ist.

## Revendications

1. Dispositif de traitement de denrées alimentaires, muni d'un tambour (1) et d'une vis (2) convoyeuse montée tournante dans le tambour (1) afin de déplacer les denrées alimentaires dans la direction longitudinale du tambour (1) dans la direction de moyens en forme de roue (8 à 11) munis de pales (9) et reliés à l'une des extrémités de la vis (2) convoyeuse, le dispositif étant en outre muni d'une goulotte (21) de déchargement se trouvant en partie à l'intérieur des moyens en forme de roue (8 à 11), de manière à pouvoir transporter en cours de fonctionnement des denrées alimentaires vers le haut au moyen des lames (9) tournantes des moyens en forme de roue (8 à 11), et à pouvoir les déposer dans la goulotte (21) de déchargement, caractérisé en ce que ladite extrémité de la vis (2) convoyeuse fait saillie au-delà du tambour (1) et en ce que les moyens en forme de roue (8 à 11) sont fixés à la partie extérieure de la pale (4) de la vis (2) convoyeuse disposée à l'extérieur du tambour (1) au moyen d'une enveloppe (6), l'enveloppe (6) entourant le tambour (1) par son extrémité éloignée des moyens en forme de roue (8 à 11).

2. Dispositif suivant la revendication 1, caractérisé en ce que la partie de la vis (2) convoyeuse dépassant du tambour (1) et l'enveloppe (6) sont entourées d'une pièce de liaison (15), qui est prévue entre une chambre (12) dans laquelle sont logés les moyens en forme de roue (8 à 11) et l'extrémité du tambour (1).

3. Dispositif suivant la revendication 1 ou 2, caractérisé en ce que, considéré dans la direction de l'axe de rotation des moyens en forme de roue (8 à 11), les pales (9) des moyens en forme de roue font sensiblement saillie au-delà de l'enveloppe (6) fixée aux pales (4) de la vis convoyeuse.
